# EUROPÄISCHE PATENTSCHRIFT

(11) **EP 3 363 684 B1**
(45) Veröffentlichungstag und Bekanntmachung des Hinweises auf die Patenterteilung: **08.12.2021**
(21) Anmeldenummer: 18154059.2
(22) Anmeldetag: 30.01.2018
(51) Int. Cl.: B60Q 1/08, B60Q 1/24

(54) **ADAPTIVES LICHTSYSTEM EINES GELÄNDEGÄNGIGEN FAHRZEUGS**
ADAPTIVE LIGHT SYSTEM OF AN OFF-ROAD VEHICLE
SYSTÈME D'ÉCLAIRAGE ADAPTATIF D'UN VÉHICULE TOUT-TERRAIN

(30) Priorität: 21.02.2017 DE 102017202808; 30.03.2017 DE 102017205467
(43) Veröffentlichungstag der Anmeldung: 22.08.2018
(73) Patentinhaber: Deere & Company, Moline, IL 61265 (US)
(72) Erfinder: Fritz, Norbert, 68163 Mannheim (DE); Hollstein, Jürgen, 68163 Mannheim (DE)
(74) Vertreter: Dehnhardt, Florian Christopher

(56) Entgegenhaltungen:
- EP-A1- 2 158 799
- EP-A1- 2 415 637
- DE-A1-102005 036 002
- US-A1- 2013 286 671
- US-A1- 2014 211 488

## Beschreibung

Die Erfindung betrifft ein adaptives Lichtsystem eines geländegängigen Fahrzeugs, mit einer hinsichtlich Abstrahlcharakteristik und/oder Lichtintensität steuerbaren Beleuchtungseinrichtung.

Ein derartiges Lichtsystem in Gestalt einer Vorrichtung zur Einstellung einer Beleuchtung für ein Straßenfahrzeug ist beispielsweise in der DE 10 2010 040 650 A1 beschrieben. Demgemäß ermittelt eine Kontrolleinheit auf Grundlage von Straßenverlaufsinformationen die Einsehbarkeit vorausliegender Kurven, um die Beleuchtung in Abhängigkeit der ermittelten Einsehbarkeit derart anzupassen, dass eine möglichst geringe Blendung des entgegenkommenden Verkehrs gewährleistet ist. Das bekannte Lichtsystem ist in erster Linie für eine Verwendung im Straßenverkehr vorgesehen.

Ein adaptives Lichtsystem eines geländegängigen Fahrzeugs mit einer hinsichtlich Abstrahlcharakteristik und/oder Lichtintensität steuerbaren Beleuchtungseinrichtung ist aus der US 2014/0211488 A1 bekannt.

Es ist daher Aufgabe der vorliegenden Erfindung, ein an die Anforderungen geländegängiger Fahrzeuge angepasstes adaptives Lichtsystem der eingangs genannten Art zu verbessern.

Diese Aufgabe wird durch ein adaptives Lichtsystem eines geländegängigen Fahrzeugs mit den Merkmalen des Patentanspruchs 1 gelöst.

Das adaptive Lichtsystem eines geländegängigen Fahrzeugs umfasst eine hinsichtlich Abstrahlcharakteristik und/oder Lichtintensität steuerbare Beleuchtungseinrichtung sowie eine Kontrolleinheit, die die Abstrahlcharakteristik und/oder Lichtintensität durch Ansteuerung der Beleuchtungseinrichtung nach Maßgabe ermittelter Fremdlichteinflüsse und optional einer ermittelten Blickrichtung eines Fahrzeugbedieners, einer ermittelten Relativposition eines geländegängigen Fremdfahrzeugs und/oder kartografischer Standortinformationen anpasst.

Auf diese Weise lässt sich durch Auswertung der momentanen Blickrichtung des Fahrzeugbedieners die Beleuchtung dem aktuellen Aufmerksamkeitsfokus des Fahrzeugbedieners anpassen, sodass insbesondere ein lästiges manuelles Einstellen eines gewünschten Ausleuchtungsbereichs einer Umfeld- bzw. Arbeitsbeleuchtung des geländegängigen Fahrzeugs während eines Geländeeinsatzes entfallen kann, wohingegen durch Beachtung möglicher Fremdlichteinflüsse zusätzlich oder alternativ eine Berücksichtigung des vorhandenen Restlichts oder anderer (künstlicher) Lichtquellen möglich ist. Anhand der ermittelten Relativpositionen geländegängiger Fremdfahrzeuge lässt sich zudem deren möglicher Eintritt in den Ausleuchtungsbereich der Umfeld- bzw. Arbeitsbeleuchtung des geländegängigen Fahrzeugs vorhersagen, sodass sich diese in die jeweilige Beleuchtungssituation mit einbeziehen lassen. Denkbar sind hier Fälle, in denen mehrere geländegängige Fahrzeuge ein und dasselbe Terrain befahren, im Landwirtschaftsbereich zum Beispiel ein Feldhäcksler und ein neben dem Feldhäcksler herfahrender landwirtschaftlicher Traktor mit einem Ladewagen. Zur Kontrolle eines während der Fahrt durchgeführten Überladevorgangs kann hier vorgesehen sein, dass der Ausleuchtungsbereich einer Umfeld- bzw. Arbeitsbeleuchtung des Feldhäckslers gezielt auf den Ladewagen ausgeweitet wird. Daneben erlaubt die Berücksichtigung kartografischer Standortinformationen eine gezielte Planung insbesondere eines gewünschten Ausleuchtungsbereichs der Umfeld- bzw. Arbeitsbeleuchtung entlang einer zu befahrenden Geländestrecke. So kann beispielsweise vorgesehen sein, dass Hindernisse oder Gefahrenstellen (Felsen, Abzugsgräben und dergleichen) kartografisch erfasst sowie bei Erreichen ihrer zugehörigen Position durch zusätzliche Ausleuchtung sichtbar hervorgehoben werden. Auch lässt sich das Umfeld der zu befahrenden Geländestrecke dahingehend berücksichtigen, dass eine angrenzende Straße, Ortschaften oder dergleichen zur Vermeidung einer unerwünschten Blendung aus dem Ausleuchtungsbereich der Umfeld- bzw. Arbeitsbeleuchtung durch geeignete Anpassung der Abstrahlcharakteristik und/oder Lichtintensität ausgenommen werden. Die insofern relevanten kartografischen Standortinformationen können hierbei offline mittels einer Planungssoftware erfasst sowie anschließend in die Kontrolleinheit des adaptiven Lichtsystems hochgeladen werden.

Generell kann das geländegängige Fahrzeug von beliebiger Bauart sein, denkbar ist unter anderem eine Verwendung des adaptiven Lichtsystems in landwirtschaftlichen Traktoren, Erntemaschinen, Feldhäckslern, Forstmaschinen, Baumaschinen oder dergleichen. Vorteilhafte Weiterbildungen des erfindungsgemäßen adaptiven Lichtsystems gehen aus den Unteransprüchen hervor.

Vorzugsweise handelt es sich bei der Beleuchtungseinrichtung um eine Umfeld- bzw. Arbeitsbeleuchtung des geländegängigen Fahrzeugs.

Die Umfeld- bzw. Arbeitsbeleuchtung kann mehrere Scheinwerfer aufweisen, die unter anderem im Dachbereich der Fahrerkabine angebracht sind und eine flächige bzw. überlappende Ausleuchtung einer das geländegängige Fahrzeug umgebenden Geländeoberfläche ermöglichen. Zur Anpassung der Abstrahlcharakteristik und/oder Lichtintensität können diese einzeln schaltbar sowie hinsichtlich ihrer Leuchtstärke veränderbar sein. Hierbei ist es denkbar, dass die einzelnen Scheinwerfer neben dem eigentlichen Leuchtmittel (Halogen- bzw. Gasentladungslampen, LEDs oder dergleichen) zusätzlich optische Einrichtungen zur Veränderung der Abstrahlcharakteristik, mithin ihres Abstrahlwinkels bzw. der vom Abstrahlwinkel abhängigen Lichtverteilung aufweisen. Die optischen Einrichtungen können entweder durch elektrisch steuerbare optische Systeme (Blenden bzw. Linsensysteme) oder aber durch das Leuchtmittel selbst gebildet sein. In letzterem Fall besteht dieses typischerweise aus einer segmentierten LED-Matrix, bei der sich einzelne Matrixsegmente von Seiten der Kontrolleinheit an- und abschalten sowie bezüglich ihrer Leuchtstärke verändern lassen.

Zusätzlich kann das adaptive Lichtsystem eine von einem Anbauoder Zusatzgeräts des geländegängigen Fahrzeugs umfasste weitere Beleuchtungseinrichtung aufweisen, insbesondere in Gestalt einer eigenen Umfeld- bzw. Arbeitsbeleuchtung. In diesem Fall wird die weitere Beleuchtungseinrichtung im Verbund mit der Beleuchtungseinrichtung des geländegängigen Fahrzeugs seitens der Kontrolleinheit derart angesteuert, dass eine gewünschte Gesamtbeleuchtungssituation erzielbar ist.

Grundsätzlich kann die Kontrolleinheit die Leuchtstärke in außerhalb der Blickrichtung liegenden und/oder blendungsgefährdeten Bereichen durch Anpassung der Abstrahlcharakteristik und/oder Lichtintensität der Beleuchtungseinrichtung reduzieren. Auf diese Weise ist nicht nur eine Einsparung elektrischer Energie möglich, da sich die Beleuchtung auf im Aufmerksamkeitsfokus des Fahrzeugbedieners liegende Bereiche beschränken lässt, sondern es wird auch ein Blendungsrisiko von in den Ausleuchtungsbereich einer Arbeits- bzw. Umfeldbeleuchtung des geländegängigen Fahrzeugs eintretenden geländegängigen Fremdfahrzeugen vermindert, was sich anhand der ermittelten Fremdlichteinflüsse und/oder der ermittelten Relativposition des betreffenden geländegängigen Fremdfahrzeugs unschwer beurteilen lässt. Die Fremdlichteinflüsse (oder auch Streulichteinflüsse) können hierbei aufgrund eigener Umfeld- bzw. Arbeitsbeleuchtungen der geländegängigen Fremdfahrzeuge verursacht sein.

Des Weiteren besteht die Möglichkeit, dass die Kontrolleinrichtung die Blickrichtung des Fahrzeugbedieners durch optische Erfassung der Augenstellung und/oder der Kopfhaltung ermittelt. Derartige Einrichtungen sind beispielweise aus dem Automobilbereich im Zusammenhang mit Systemen zur Einschlafwarnung bekannt und umfassen eine Kamera, die beispielsweise in einen Rückspiegel bzw. ein von dem Rückspiegel umfasstes Gehäuse innerhalb eines Fahrgastraums integriert ist, um mittels einer zugehörigen Bildverarbeitungssoftware den Müdigkeitsgrad des Fahrers aus hierfür charakteristischen Anzeichen einer erfassten Bewegung der Augenlider bzw. Pupillen abzuleiten.

Bevorzugt weist die Kontrolleinheit eine Datenschnittstelle zum drahtlosen Empfang von seitens des geländegängigen Fremdfahrzeugs ausgesandten Positionsinformationen auf, wobei die Kontrolleinheit die Relativposition durch Vergleich mit auf das landwirtschaftliche Fahrzeug bezogenen Positionsinformationen ermittelt. Die Beurteilung bzw. Ermittlung der Relativposition erfolgt hierbei unter Zugrundelegung eines polaren Koordinatensystems, bei dem das geländegängige Fahrzeug den Koordinatenursprung bildet. Die seitens der Datenschnittstelle mit dem geländegängigen Fremdfahrzeug ausgeführte Kommunikation kann über ein vorhandenes Mobilfunknetz erfolgen, entweder unmittelbar zwischen den Fahrzeugen oder aber über einen zentralen Datenserver bzw. eine Daten-Cloud. Auch ist es möglich, dass die Kontrolleinheit die Relativposition durch optische Umgebungserfassung anhand einer mittels Bildmusterkennung durchgeführten Unterscheidung zwischen bewegten und stationären Objekten ermittelt.

Typischerweise erfolgt die Erfassung der auf das geländegängige Fahrzeug bezogenen Positionsinformationen mittels eines satellitengestützten Navigationssystems. Das satellitengestützte Navigationssystem kann hierbei fest in das landwirtschaftliche Fahrzeug eingebaut sein, es kann sich aber auch um eine mobile Navigationseinheit handeln, beispielsweise als Bestandteil eines vom Fahrzeugbediener mitgeführten Tablet-Computers, eines Mobiltelefons oder dergleichen. Hierbei werden die ermittelten Positionsinformationen zum Beispiel über eine LTE- oder WLAN-Verbindung drahtlos an die Kontrolleinheit übertragen.

Ferner ist es denkbar, dass die Kontrolleinheit die Beleuchtungseinrichtung im Falle einer Reduzierung der Lichtintensität derart ansteuert, dass eine vorgegebene Restleuchtstärke nicht unterschritten wird. Die Aufrechterhaltung einer bestimmten Restleuchtstärke verhindert gerade im Zusammenhang mit beleuchtbaren Bedien- und Anzeigeelementen, dass beim Fahrzeugbediener fälschlicherweise der Eindruck erweckt wird, die zugehörigen Funktionen seien deaktiviert bzw. inaktiv. Eine derartiger Eindruck kann sich bei vollständigem Abschalten der Instrumentenbeleuchtung ergeben. Ähnliche Betrachtungen gelten hinsichtlich des Falls, dass eine Umfeld- bzw. Arbeitsbeleuchtung des geländegängigen Fahrzeugs ausgeschaltet wird, was beim Fahrzeugbediener aufgrund des verzögerten Adaptionsvermögens des Auges zu möglichen Irritationen führen kann. Die Restleuchtstärke, wie auch eine gewünschte Höchstleuchtstärke, kann hierbei seitens des Fahrzeugbedieners manuell vorgebbar sein.

Erfindungsgemäß steht die Kontrolleinheit zur Ermittlung der Fremdlichteinflüsse mittels eines umgebungserfassenden Lichtund/oder Bildsensors in Verbindung. Bei dem Licht- und/oder Bildsensor kann es sich entweder um eine oder mehrere im Dachbereich der Fahrerkabine angeordnete Kameras, insbesondere um eine Panorama- oder Rundumkamera, oder aber um entlang einer Außenseite des geländegängigen Fahrzeugs verteilt angeordnete lichtempfindliche Sensorelemente oder Einzelkameras handeln.

Erfindungsgemäß ermöglicht der umgebungserfassende Licht- und/oder Bildsensor eine Ermittlung der Lichtverteilung im Umfeld des geländegängigen Fahrzeugs, wozu dieser die Fremdlichteinflüsse hinsichtlich Abstrahlcharakteristik und/oder Lichtintensität erfassen kann. Dies erlaubt eine besonders genaue Anpassung der Abstrahlcharakteristik und/oder Lichtintensität der Beleuchtungseinrichtung des geländegängigen Fahrzeugs, um durch entsprechende Einbeziehung der ermittelten Lichtverteilung der Fremdlichteinflüsse eine gleichbleibende Ausleuchtung der Umgebung im Bereich des geländegängigen Fahrzeugs zu erzielen. Zusätzlich kann die Kontrolleinheit eine Klassifizierung der Fremdlichteinflüsse durch Referenzierung mit kartografischen Standortinformationen vornehmen, wobei eine Ansteuerung der Beleuchtungseinrichtung insofern unterbleibt, als sich aus der Klassifizierung ergibt, dass die Fremdlichteinflüsse von einem stationären Objekt ausgehen. Eine Blendungsgefährdung ist hier nicht gegeben, beispielsweise kann es sich um eine Straßen- oder Hofbeleuchtung handeln. Die durchgeführte Klassifizierung erlaubt eine verlässliche Differenzierung derartiger Fremdlichteinflüsse gegenüber solchen, die von anderen Fahrzeugen herrühren und bei denen eine entsprechende Blendungsgefährdung besteht. Die Klassifizierung selbst kann durch Abgleich der kartografischen Standortinformationen mit seitens eines satellitengestützten Navigationssystems bereitgestellten Positionsinformationen erfolgen.

Der Vollständigkeit halber sei angemerkt, dass eine Vielzahl von jeweils mit dem adaptiven Lichtsystem ausgestatteten geländegängigen Fahrzeugen eine Flotte bilden kann, wobei die einzelnen Flottenfahrzeuge über eine drahtlose Datenkommunikationsverbindung miteinander in Austausch stehen, um die Abstrahlcharakteristiken und/oder Lichtintensitäten zugehöriger Arbeits- bzw. Umfeldbeleuchtungen im Sinne einer optimalen bzw. homogenen Ausleuchtung einer zu bearbeitenden Geländeoberfläche bzw. zur Vermeidung einer gegenseitigen Blendung untereinander abzustimmen bzw. anzupassen.

Das erfindungsgemäße adaptive Lichtsystem wird im Folgenden anhand der beigefügten Zeichnungen näher erläutert. Es zeigen:
- Fig. 1: ein Ausführungsbeispiel des erfindungsgemäßen adaptiven Lichtsystems in einem geländegängigen Fahrzeug in Gestalt eines Feldhäckslers,
- Fig. 2: ein Blockschaltbild des erfindungsgemäßen adaptiven Lichtsystems, und
- Fig. 3: eine beispielhafte Lichtszene für den Fall eines neben dem in Fig. 1 wiedergegebenen Feldhäcksler herfahrenden geländegängigen Fremdfahrzeugs in Gestalt eines aus einem Ladewagen sowie einem landwirtschaftlichen Traktor bestehenden Fahrzeuggespanns.

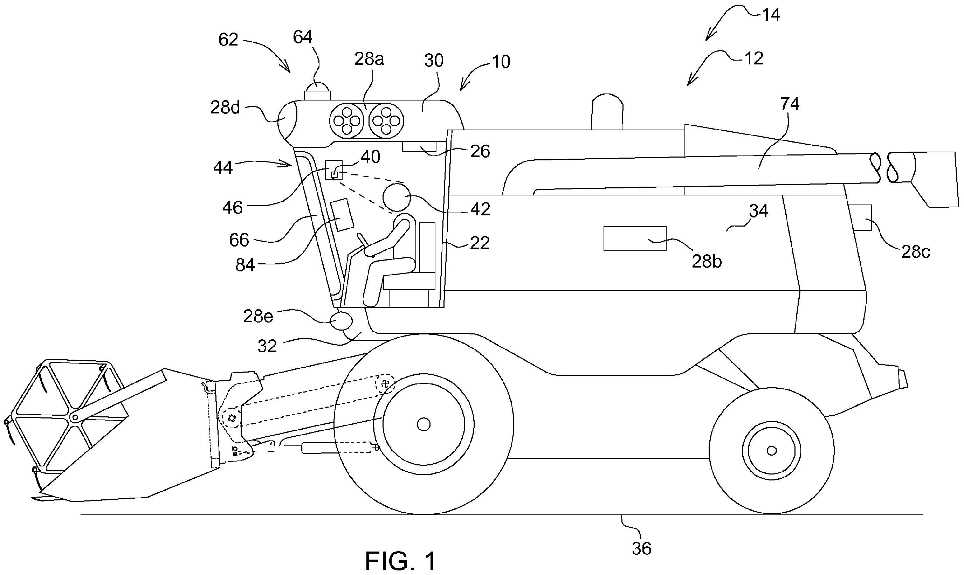

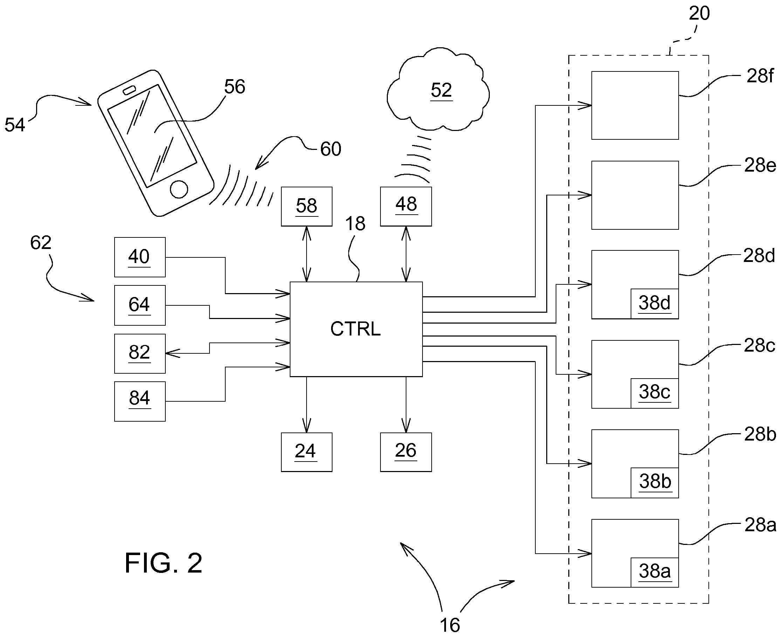

Fig. 1 zeigt ein Ausführungsbeispiel des erfindungsgemäßen adaptiven Lichtsystems, wobei dieses nachfolgend unter Bezugnahme auf das in Fig. 2 dargestellte Blockschaltbild beschrieben werden soll.

Beispielsgemäß ist das adaptive Lichtsystem 10 Bestandteil eines als Feldhäcksler 12 ausgebildeten geländegängigen Fahrzeugs 14. Generell kann das geländegängige Fahrzeug 14 auch von beliebiger anderer Bauart sein, denkbar ist unter anderem eine Verwendung des adaptiven Lichtsystems 10 in landwirtschaftlichen Traktoren, Erntemaschinen, Forstmaschinen, Baumaschinen oder dergleichen.

Das adaptive Lichtsystem 10 umfasst eine in Fig. 2 dargestellte Beleuchtungseinrichtung 16, die sich seitens einer elektronischen Kontrolleinheit 18 hinsichtlich Abstrahlcharakteristik und/oder Lichtintensität steuern lässt.

Genauer gesagt handelt es sich bei der Beleuchtungseinrichtung 16 um eine Umfeld- bzw. Arbeitsbeleuchtung 20 des Feldhäckslers 12 sowie um eine innerhalb einer Fahrerkabine 22 vorgesehene Beleuchtung in Gestalt beleuchtbarer Bedien- und Anzeigeelemente 24 bzw. einer Kabineninnenraumbeleuchtung 26. Gemäß Fig. 1 weist die Umfeld- bzw. Arbeitsbeleuchtung 20 mehrere Scheinwerfer 28a, 28b, 28c, 28d, 28e auf, die in einem Dachbereich 30 bzw. an einer Frontschürze 32 der Fahrerkabine 22 sowie an einer Karosserie 34 des Feldhäckslers 12 angebracht sind und eine flächige bzw. überlappende Ausleuchtung einer den Feldhäcksler 12 umgebenden Gelände- bzw. Feldoberfläche 36 ermöglichen. Zumindest die Scheinwerfer 28a, 28b, 28c sind zur Anpassung der Abstrahlcharakteristik und/oder Lichtintensität seitens der Kontrolleinheit 18 einzeln schaltbar sowie hinsichtlich ihrer Leuchtstärke veränderbar. Auf der dem Betrachter abgewandten Seite des Feldhäckslers 12 befinden sich weitere, mit den seitlich angebrachten Scheinwerfern 28a, 28b korrespondierende Scheinwerfer.

Zusätzlich weisen die Scheinwerfer 28a, 28b, 28c neben dem eigentlichen Leuchtmittel (Halogen- bzw. Gasentladungslampe, LEDs oder dergleichen) optische Einrichtungen 38a, 38b, 38c zur Veränderung der Abstrahlcharakteristik, mithin des Abstrahlwinkels bzw. der vom Abstrahlwinkel abhängigen Lichtverteilung auf. Die in Fig. 1 nicht im Detail dargestellten optischen Einrichtungen 38a, 38b, 38c sind entweder durch elektrisch steuerbare optische Systeme (Blenden bzw. Linsensysteme) oder aber durch das Leuchtmittel selbst gebildet. In letzterem Fall besteht dieses aus einer segmentierten LED-Matrix, bei der sich einzelne Matrixsegmente von Seiten der Kontrolleinheit 18 an- und abschalten sowie bezüglich ihrer Leuchtstärke verändern lassen. Dies ist beispielhaft für den im Dachbereich 30 der Fahrerkabine 22 seitlich angeordneten Scheinwerfer 28a veranschaulicht.

Innerhalb der Fahrerkabine 22 befindet sich eine Kamera 40 zur optischen Erfassung der Augenstellung und/oder der Kopfhaltung eines Fahrzeugbedieners 42. Die insofern gewonnenen Informationen werden der Kontrolleinheit 18 zugeführt, um mittels einer Bildverarbeitungssoftware die momentane Blickrichtung des Fahrzeugbedieners 42 zu ermitteln. Die Kamera 40 ist in einen Rückspiegel 44 bzw. ein von dem Rückspiegel 44 umfasstes Gehäuse 46 integriert.

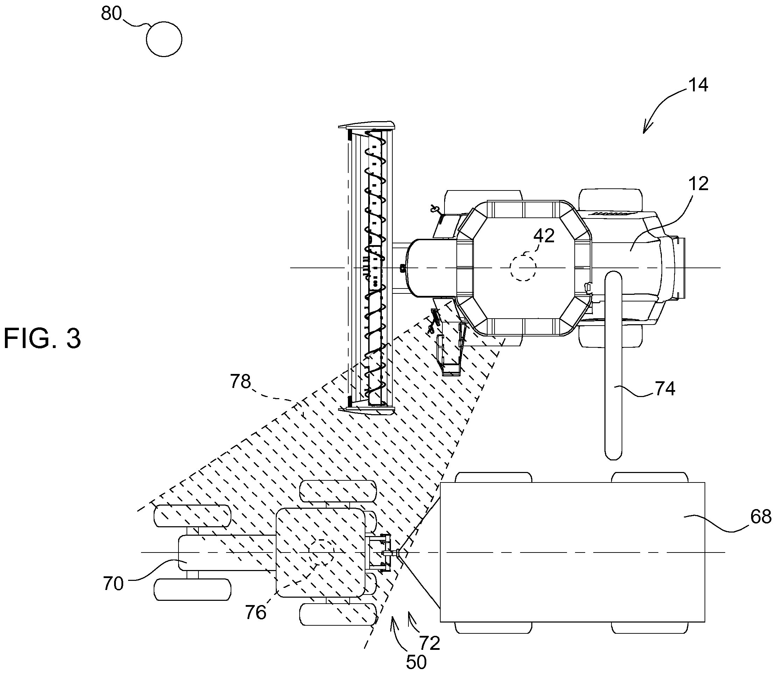

Daneben weist die Kontrolleinheit 18 eine Datenschnittstelle 48 zum drahtlosen Empfang von seitens eines geländegängigen Fremdfahrzeugs 50 ausgesandten Positionsinformationen auf (siehe hierzu auch Fig. 3). Die von dem geländegängigen Fremdfahrzeug 50 ausgesandten Positionsinformationen befinden sich in einer Daten-Cloud 52 und sind von dort über die Datenschnittstelle 48 über ein vorhandenes Mobilfunknetz abrufbar.

Ausgehend von den empfangenen Positionsinformationen ermittelt die Kontrolleinheit 18 eine Relativposition des Feldhäckslers 12 gegenüber dem geländegängigen Fremdfahrzeug 50, wozu diese einen Vergleich mit auf den Feldhäcksler 12 bezogenen Positionsinformationen durchführt. Die Beurteilung bzw. Ermittlung der Relativposition erfolgt hierbei unter Zugrundelegung eines polaren Koordinatensystems, bei dem der Feldhäcksler 12 den Koordinatenursprung bildet.

Die auf den Feldhäcksler 12 bezogenen Positionsinformation werden mittels eines satellitengestützten Navigationssystems 54 erfasst. Das satellitengestützte Navigationssystem 54 ist entweder fest in den Feldhäcksler 12 eingebaut oder aber als mobile Navigationseinheit 56 ausgebildet. Letztere ist Bestandteil eines Mobiltelefons des Fahrzeugbedieners 42, wobei die ermittelten Positionsinformationen über eine mittels einer Mobilfunk-Schnittstelle 58 hergestellten LTE-Verbindung 60 drahtlos an die Kontrolleinheit 18 übertragen werden.

Darüber hinaus steht die Kontrolleinheit 18 zur Ermittlung möglicher Fremdlichteinflüsse mit einem umgebungserfassenden Lichtund/oder Bildsensor 62 in Verbindung. Bei dem Licht- und/oder Bildsensor 62 handelt es sich um eine im Dachbereich 30 der Fahrerkabine 22 angeordnete Panorama- oder Rundumkamera 64. Abweichend davon kann es sich auch um entlang einer Außenseite des Feldhäckslers 12 verteilt angeordnete (nicht dargestellte) lichtempfindliche Sensorelemente oder Einzelkameras handeln.

Der umgebungserfassende Licht- und/oder Bildsensor 62 ermöglicht eine Ermittlung der Lichtverteilung im Umfeld des Feldhäckslers 12, wozu dieser die Fremdlichteinflüsse hinsichtlich ihrer Abstrahlcharakteristik und/oder Lichtintensität erfasst.

Die solchermaßen in Bezug auf die momentane Blickrichtung des Fahrzeugbedieners 42, mögliche Fremdlichteinflüsse und/oder die Relativposition des geländegängigen Fremdfahrzeugs 50 ermittelten Informationen werden der Kontrolleinheit 18 in Form entsprechender Datensignale zugeführt, wobei die Kontrolleinheit 18 die Abstrahlcharakteristik und/oder Lichtintensität durch Ansteuerung der Beleuchtungseinrichtung 16 nach Maßgabe der ermittelten Informationen anpasst.

In diesem Zusammenhang sieht eine von der Kontrolleinheit 18 ausgeführte erste Steuerroutine vor, die Leuchtstärke in außerhalb der Blickrichtung des Fahrzeugbedieners 42 liegenden Bereichen durch Anpassung der Abstrahlcharakteristik und/oder der Lichtintensität der Beleuchtungseinrichtung 16 zu reduzieren.

So reduziert die Kontrolleinheit 18 die Leuchtstärke des rückwärtigen Scheinwerfers 28c, wenn sich aufgrund der ermittelten Blickrichtung ergibt, dass der Fahrzeugbediener 42 seit geraumer Zeit nicht mehr nach hinten geblickt hat, was entweder durch Drehen des Kopfs oder aber durch einen Blick in den Rückspiegel 44 geschehen kann. Richtet der Fahrzeugbediener 42 hingegen seinen Blick erneut nach hinten, so erhöht die Kontrolleinheit 18 die Leuchtstärke des rückwärtigen Scheinwerfers 28c auf ihren ursprünglichen Wert.

Entsprechende Betrachtungen gelten für die Anpassung der Leuchtstärke der seitlich angeordneten Scheinwerfer 28a, 28b, wie auch der beleuchtbaren Bedien- und Anzeigeelemente 24 bzw. der Kabineninnenraumbeleuchtung 26 (sofern diese eine voneinander unabhängige Steuerung der Beleuchtung individueller Kabinenbereiche erlaubt), um störendes Streulicht innerhalb der Fahrerkabine 22 insbesondere aufgrund von Reflexionen an Glasoberflächen 66 oder dergleichen zu minimeren.

Ausgenommen hiervon sind aus Gründen der Fahrtsicherheit die in Fahrtrichtung orientierten Frontscheinwerfer 28d, 28e des Feldhäckslers 12.

Im Ergebnis führt die erste Steuerroutine zu einer Einsparung elektrischer Energie, da sich die Beleuchtung auf im Aufmerksamkeitsfokus des Fahrzeugbedieners 42 liegende Bereiche beschränken lässt. Dies ist insbesondere im Falle batteriebetriebener Systeme von Bedeutung, da hier der optimalen Nutzung der zur Verfügung stehenden Batteriekapazität eine besondere Bedeutung zukommt.

Im Falle einer von der Kontrolleinheit 18 ausgeführten zweiten Steuerroutine erfolgt eine Anpassung der Abstrahlcharakteristik und/oder Lichtintensität der Beleuchtungseinrichtung 16 nach Maßgabe kartografischer Standortinformationen. Die Berücksichtigung kartografischer Standortinformationen erlaubt eine gezielte Planung insbesondere eines gewünschten Ausleuchtungsbereichs der Umfeld- bzw. Arbeitsbeleuchtung 20 entlang einer zu befahrenden Geländestrecke. So ist vorgesehen, dass Hindernisse oder Gefahrenstellen (Felsen, Abzugsgräben und dergleichen) kartografisch erfasst sowie bei Erreichen ihrer zugehörigen Position durch zusätzliche Ausleuchtung sichtbar hervorgehoben werden. Letzteres wird durch Abgleich mit den seitens des satellitengestützten Navigationssystems 54 bereitgestellten Positionsinformationen durchgeführt. Auch wird das Umfeld der zu befahrenden Geländestrecke dahingehend berücksichtigt, dass eine angrenzende Straße, Ortschaften oder dergleichen zur Vermeidung einer unerwünschten Blendung aus dem Ausleuchtungsbereich der Umfeld- bzw. Arbeitsbeleuchtung durch geeignete Anpassung der Abstrahlcharakteristik und/oder Lichtintensität ausgenommen werden. Die insofern relevanten kartografischen Standortinformationen können hierbei offline mittels einer Planungssoftware erfasst sowie anschließend in die Kontrolleinheit 18 des adaptiven Lichtsystems 10 hochgeladen werden.

Eine von der Kontrolleinheit 18 ausgeführte dritte Steuerroutine sieht vor, die Leuchtstärke in blendungsgefährdeten Bereichen durch Anpassung der Abstrahlcharakteristik und/oder der Lichtintensität der Beleuchtungseinrichtung 16 zu reduzieren, um ein Blendungsrisiko von in den Ausleuchtungsbereich des Feldhäckslers 12 eintretenden geländegängigen Fremdfahrzeugen zu vermindern.

Eine derartige Beleuchtungssituation ist in Fig. 3 dargestellt, die eine beispielhafte Lichtszene für den Fall eines neben dem Feldhäcksler 12 herfahrenden geländegängigen Fremdfahrzeugs 50 in Gestalt eines aus einem Ladewagen 68 sowie einem landwirtschaftlichen Traktor 70 bestehenden Fahrzeuggespanns 72 zeigt. Zur Kontrolle eines während der Fahrt durchgeführten Überladevorgangs ist unter anderem vorgesehen, dass der Ausleuchtungsbereich der Umfeld- bzw. Arbeitsbeleuchtung 20 des Feldhäckslers 12 auf den Ladewagen 68 gezielt ausgeweitet wird.

Zu diesem Zweck bestimmt die Kontrolleinheit 18 aus den über die Datenschnittstelle 48 aus der Daten-Cloud 52 empfangenen Positionsinformationen die aktuelle Relativposition des Ladewagens 68 gegenüber dem Feldhäcksler 12 bzw. einem an diesem vorgesehenen Auswurfkrümmer 74. Der landwirtschaftliche Traktor 70 weist eine eigene (nicht dargestellte) Umfeld- bzw. Arbeitsbeleuchtung auf, wobei die mittels des umgebungserfassenden Licht- und/oder Bildsensors 62 ermittelte Lichtverteilung von der Kontrolleinheit 18 bei der Anpassung der Abstrahlcharakteristik und/oder Lichtintensität der Beleuchtungseinrichtung 16 derart in die allgemeine Beleuchtungssituation einbezogen wird, dass zum einen eine optimale bzw. homogene Ausleuchtung der Umgebung bzw. Feldoberfläche 36 im Bereich des Feldhäckslers 12 sichergestellt und zum anderen eine Blendung eines Fahrzeugbedieners 76 des landwirtschaftlichen Traktors 70 ausgeschlossen ist. Der landwirtschaftliche Traktor 70 befindet sich anschaulich gesprochen in einem von der Beleuchtungseinrichtung 16 ausgesparten abgedunkelten Bereich 78, der der Bewegung des landwirtschaftlichen Traktors 70 entsprechend der jeweils ermittelten Relativposition folgt. Dies gilt insbesondere auch für den Fall, dass das abgebildete Fahrzeuggespann 72 nach dem Befüllen des Ladewagens 68 wegfährt sowie ein neues Fahrzeuggespann mit leerem Ladewagen an den Feldhäcksler 12 heranfährt und in den Ausleuchtungsbereich der Umfeld- bzw. Arbeitsbeleuchtung 20 des Feldhäckslers 12 eintritt, was sich anhand der für das neue Fahrzeuggespann ermittelten Relativposition vorhersagen lässt.

Zusätzlich nimmt die Kontrolleinheit 18 eine Klassifizierung der Fremdlichteinflüsse durch Referenzierung mit kartografischen Standortinformationen vor, wobei eine Ansteuerung der Beleuchtungseinrichtung 16 insofern unterbleibt, als sich aus der Klassifizierung ergibt, dass die Fremdlichteinflüsse von einem stationären Objekt 80 ausgehen. Eine Blendungsgefährdung ist hier nicht gegeben, beispielsweise kann es sich um eine Straßen- oder Hofbeleuchtung handeln. Die durchgeführte Klassifizierung erlaubt eine verlässliche Differenzierung derartiger Fremdlichteinflüsse gegenüber solchen, die von anderen Fahrzeugen herrühren und bei denen eine entsprechende Blendungsgefährdung besteht. Die Klassifizierung selbst kann durch Abgleich der in einer Speichereinheit 82 abgelegten kartografischen Standortinformationen mit den seitens des satellitengestützten Navigationssystems 54 bereitgestellten Positionsinformationen erfolgen.

Die drei Steuerroutinen können nebeneinander oder alternativ zueinander in der Kontrolleinheit 18 ablaufen. Eine entsprechende Auswahl der gewünschten Steuerroutine kann der Fahrzeugbediener 42 über ein mit der Kontrolleinheit 18 in Verbindung stehendes Bedienerterminal 84 treffen, über das sich auch die in die Beleuchtungssituation einzubeziehenden Scheinwerfer 28a, 28b, 28c manuell vorauswählen lassen. Daneben kann auch ein Automatikmodus vorgesehen sein, in dem durch Auswertung der momentanen Blickrichtung des Fahrzeugbedieners 42 die Beleuchtung dem aktuellen Aufmerksamkeitsfokus des Fahrzeugbedieners 42 angepasst wird, sodass insbesondere ein lästiges manuelles Einstellen eines gewünschten Ausleuchtungsbereichs der Umfeld- bzw. Arbeitsbeleuchtung 20 des Feldhäckslers 12 während der Feldbearbeitung entfallen kann. Erfindungsgemäß wird die Anpassung der Beleuchtung zum Zwecke der Berücksichtigung des vorhandenen Restlichts oder anderer (künstlicher) Lichtquellen nach Maßgabe der ermittelten Fremdlichteinflüsse von der Kontrolleinheit 18 modifiziert.

Wird der Automatikmodus abgeschaltet, so hat der Fahrzeugbediener die Möglichkeit, über das Bedienerterminal 84 eine gewünschte Abstrahlcharakteristik und/oder Lichtintensität manuell einzustellen.

Ungeachtet der jeweiligen Steuerroutine steuert die Kontrolleinheit 18 die Beleuchtungseinrichtung 16 im Falle einer Reduzierung der Lichtintensität stets derart an, dass eine vorgegebene Restleuchtstärke nicht unterschritten wird. Die Restleuchtstärke, wie auch eine gewünschte Höchstleuchtstärke, ist hierbei seitens des Fahrzeugbedieners über das Bedienerterminal 84 manuell vorgebbar.

Die in Fig. 3 dargestellte Beleuchtungssituation dient lediglich der Veranschaulichung der Funktion des adaptiven Lichtsystems für den Fall, dass mehrere geländegängige Fahrzeuge ein und dasselbe Feld befahren, wobei eines der geländegängigen Fahrzeuge mit dem adaptiven Lichtsystem ausgestattet ist. Es sind jedoch auch beliebige andere Beleuchtungssituationen vorstellbar, bei denen eine Vielzahl von jeweils mit dem adaptiven Lichtsystem ausgestatteten geländegängigen Fahrzeugen eine Flotte bildet, wobei die einzelnen Flottenfahrzeuge über eine drahtlose Datenkommunikationsverbindung miteinander in Austausch stehen, um die Abstrahlcharakteristiken und/oder Lichtintensitäten zugehöriger Arbeits- bzw. Umfeldbeleuchtungen im Sinne einer optimalen bzw. homogenen Ausleuchtung einer zu bearbeitenden Geländeoberfläche bzw. zur Vermeidung einer gegenseitigen Blendung untereinander abzustimmen bzw. anzupassen.

## Patentansprüche

1. Adaptives Lichtsystem eines geländegängigen Fahrzeugs, mit einer hinsichtlich Abstrahlcharakteristik und/oder Lichtintensität steuerbaren Beleuchtungseinrichtung (16), **dadurch gekennzeichnet, dass**
das adaptives Lichtsystem eine Kontrolleinheit (18) umfasst, die die Abstrahlcharakteristik und/oder Lichtintensität durch Ansteuerung der Beleuchtungseinrichtung (16) nach Maßgabe ermittelter Fremdlichteinflüsse und optional einer ermittelten Blickrichtung eines Fahrzeugbedieners (42), einer ermittelten Relativposition eines geländegängigen Fremdfahrzeugs (50) und/oder kartografischer Standortinformationen anpasst, wobei die Kontrolleinheit (18) zur Ermittlung der Fremdlichteinflüsse mittels eines umgebungserfassenden Licht- und/oder Bildsensors (62) in Verbindung steht, der die Fremdlichteinflüsse hinsichtlich Abstrahlcharakteristik und/oder Lichtintensität erfasst, wobei die Kontrolleinheit (18) die daraus ermittelte Lichtverteilung der Fremdlichteinflüsse bei der Anpassung der Abstrahlcharakteristik und/oder Lichtintensität der Beleuchtungseinrichtung (16) derart einbezieht, dass eine gleichbleibende Ausleuchtung der Umgebung im Bereich des geländegängigen Fahrzeugs (14) erzielt wird.

2. Adaptives Lichtsystem nach Anspruch 1, **dadurch gekennzeichnet, dass** es sich bei der Beleuchtungseinrichtung (16) um eine Umfeld- bzw. Arbeitsbeleuchtung (20) des geländegängigen Fahrzeugs (14) handelt.

3. Adaptives Lichtsystem nach Anspruch 1 oder 2, **dadurch gekennzeichnet, dass** die Kontrolleinheit (18) die Leuchtstärke in außerhalb der Blickrichtung liegenden und/oder blendungsgefährdeten Bereichen durch Anpassung der Lichtintensität und/oder der Abstrahlcharakteristik der Beleuchtungseinrichtung (16) reduziert.

4. Adaptives Lichtsystem nach wenigstens einem der Ansprüche 1 bis 3, **dadurch gekennzeichnet, dass** die Kontrolleinrichtung (18.) die Blickrichtung des Fahrzeugbedieners (42) durch optische Erfassung der Augenstellung und/oder der Kopfhaltung ermittelt.

5. Adaptives Lichtsystem nach wenigstens einem der Ansprüche 1 bis 4, **dadurch gekennzeichnet, dass** die Kontrolleinheit (18) eine Datenschnittstelle (48) zum drahtlosen Empfang von seitens des geländegängigen Fremdfahrzeugs (50) ausgesandten Positionsinformationen aufweist, wobei die Kontrolleinheit (18) die Relativposition durch Vergleich mit auf das landwirtschaftliche Fahrzeug (14) bezogenen Positionsinformationen ermittelt.

6. Adaptives Lichtsystem nach wenigstens einem der Ansprüche 1 bis 5, **dadurch gekennzeichnet, dass** die Erfassung der auf das geländegängige Fahrzeug (14) bezogenen Positionsinformationen mittels eines satellitengestützten Navigationssystems (54) erfolgt.

7. Adaptives Lichtsystem nach wenigstens einem der Ansprüche 1 bis 6, **dadurch gekennzeichnet, dass** die Kontrolleinheit (18) die Beleuchtungseinrichtung (16.) im Falle einer Reduzierung der Lichtintensität derart ansteuert, dass eine vorgegebene Restleuchtstärke nicht unterschritten wird.

8. Adaptives Lichtsystem nach wenigstens einem der Ansprüche 1 bis 7, **dadurch gekennzeichnet, dass** die Kontrolleinheit (18) eine Klassifizierung der Fremdlichteinflüsse durch Referenzierung mit kartögrafischen Standortinformationen vornimmt, wobei eine Ansteuerung der Beleuchtungseinrichtung (16) insofern unterbleibt; als sich aus der Klassifizierung ergibt, dass die Fremdlichteinflüsse von einem stationären Objekt (82) ausgehen.

9. Geländegängiges Fahrzeug, umfassend ein adaptives Lichtsystem (10) nach wenigstens einem der Ansprüche 1 bis 8.

## Claims

1. Adaptive lighting system of an off-road utility vehicle, having an illumination device (16), which is controllable with respect to its emission characteristic and/or light intensity, **characterized in that** the adaptive lighting system comprises a control unit (18), which adapts the emission characteristic and/or light intensity by controlling the illumination device (16) in accordance with ascertained extraneous light influences and optionally an ascertained viewing direction of a vehicle operator (42), an ascertained relative position of another off-road utility vehicle (50) and/or cartographic location information, wherein, for ascertaining the extraneous light influences, the control unit (18) is connected by means of a surroundingscapturing light and/or image sensor (62) capturing the extraneous light influences with respect to the emission characteristic and/or light intensity, wherein the control unit (18) takes into account the light distribution of the extraneous light influences ascertained therefrom when adapting the emission characteristic and/or light intensity of the illumination device (16) in a manner such that consistent illumination of the surroundings is achieved in the region of the off-road utility vehicle (14).

2. Adaptive lighting system according to Claim 1, **characterized in that** the illumination device (16) is an ambient or task light (20) of the off-road utility vehicle (14).

3. Adaptive lighting system according to Claim 1 or 2, **characterized in that** the control unit (18) reduces the light intensity in regions which are outside of the viewing direction and/or prone to glare, by adapting the light intensity and/or the emission characteristic of the illumination device (16).

4. Adaptive lighting system according to at least one of Claims 1 to 3, **characterized in that** the control device (18) ascertains the viewing direction of the vehicle operator (42) by optically capturing the eye position and/or the head posture.

5. Adaptive lighting system according to at least one of Claims 1 to 4, **characterized in that** the control unit (18) has a data interface (48) for the wireless reception of position information transmitted by the other off-road utility vehicle (50), wherein the control unit (18) ascertains the relative position by comparison with position information related to the agricultural vehicle (14) .

6. Adaptive lighting system according to at least one of Claims 1 to 5, **characterized in that** the position information related to the off-road utility vehicle (14) is ascertained by means of a satellite-based navigation system (54).

7. Adaptive lighting system according to at least one of Claims 1 to 6, **characterized in that** the control unit (18) controls the illumination device (16) in the event of a reduction in the light intensity in such a way that a specified residual luminosity is not undershot.

8. Adaptive lighting system according to at least one of Claims 1 to 7, **characterized in that** the control unit (18) performs a classification of the extraneous light influences by referencing with cartographic location information, wherein control of the illumination device (16) does not take place if the classification reveals that the extraneous light influences originate from a stationary object (82).

9. Off-road utility vehicle, comprising an adaptive lighting system (10) according to at least one of Claims 1 to 8.

## Revendications

1. Système d'éclairage adaptatif d'un véhicule tout terrain, comprenant un dispositif d'éclairage (16) pouvant être commandé en termes de caractéristique de rayonnement et/ou d'intensité lumineuse,
**caractérisé en ce que** le système d'éclairage adaptatif comprend une unité de contrôle (18) qui adapte la caractéristique de rayonnement et/ou l'intensité de lumière en pilotant le dispositif d'éclairage (16) selon des influences de lumière externe déterminées et en option selon une direction de visée déterminée d'un opérateur de véhicule (42), selon une position relative déterminée d'un véhicule tout terrain externe (50) et/ou selon des informations de localisation cartographiques, l'unité de contrôle (18) étant en communication pour la détermination des influences de lumière externe au moyen d'un capteur de lumière et/ou d'image (62) détectant l'environnement qui détecte les influences de lumière externe en termes de caractéristique de rayonnement et/ou d'intensité de lumière, l'unité de contrôle (18) intégrant la distribution de lumière des influences de lumière externe, ainsi déterminée, dans l'adaptation de la caractéristique de rayonnement et/ou de l'intensité de lumière du dispositif d'éclairage (16) de telle sorte qu'une illumination constante de l'environnement soit obtenue dans la zone du véhicule tout terrain (14).

2. Système d'éclairage adaptatif selon la revendication 1, **caractérisé en ce que** le dispositif d'éclairage (16) est un éclairage ambiant ou de travail (20) du véhicule tout terrain (14).

3. Système d'éclairage adaptatif selon la revendication 1 ou 2, **caractérisé en ce que** l'unité de contrôle (18) réduit la luminosité dans des zones situées en dehors de la direction de visée et/ou présentant des risques d'éblouissement en adaptant l'intensité de lumière et/ou la caractéristique de rayonnement du dispositif d'éclairage (16).

4. Système d'éclairage adaptatif selon au moins l'une des revendications 1 à 3, **caractérisé en ce que** le dispositif de contrôle (18) détermine la direction de visée de l'opérateur de véhicule (42) par la détection optique de la position des yeux et/ou la position de la tête.

5. Système d'éclairage adaptatif selon au moins l'une des revendications 1 à 4, **caractérisé en ce que** l'unité de contrôle (18) présente une interface de données (48) pour la réception sans fil d'informations de position émises du côté du véhicule tout terrain externe (50), l'unité de contrôle (18) déterminant la position relative par une comparaison avec des informations de position concernant le véhicule agricole (14).

6. Système d'éclairage adaptatif selon au moins l'une des revendications 1 à 5, **caractérisé en ce que** la détection des informations de position concernant le véhicule tout terrain (14) est effectuée au moyen d'un système de navigation par satellite (54).

7. Système d'éclairage adaptatif selon au moins l'une des revendications 1 à 6, **caractérisé en ce que** l'unité de contrôle (18) pilote le dispositif d'éclairage (16) en cas de réduction de l'intensité de lumière de façon à ne pas passer sous une luminosité résiduelle prédéfinie.

8. Système d'éclairage adaptatif selon au moins l'une des revendications 1 à 7, **caractérisé en ce que** l'unité de contrôle (18) procède à une classification des influences de lumière externe par un référencement avec des informations de localisation cartographiques, un pilotage du dispositif d'éclairage (16) étant omis dans la mesure où il résulte de la classification que les influences de lumière externe émanent d'un objet stationnaire (82).

9. Véhicule tout terrain, comprenant un système d'éclairage adaptatif (10) selon au moins l'une des revendications 1 à 8.
